# EUROPEAN PATENT APPLICATION

(11) **EP 2 386 524 A1**
(43) Date of publication of application: **16.11.2011**
(21) Application number: 11166144.3
(22) Date of filing: 14.05.2011
(51) Int. Cl.: C02F 1/44, C02F 1/52, C02F 101/20, C02F 103/16

(54) **Solid-liquid separation system of chemically-precipitated heavy metal wastewater and separation method of using the same**

(30) Priority: 14.05.2010 CN 201010171783
(71) Applicant: Jiangxi JDL Environmental Protection Research Ltd., Nanchang Jiangxi 330100 (CN)
(72) Inventor: Liao, Zhimin, Nanchang, Jiangxi 330100 (CN)
(74) Representative: Hryszkiewicz, Danuta

(57) **Abstract**

A solid-liquid separation system of chemically-precipitated heavy metal wastewater having a membrane module disposed in a filter zone of a chemical reaction tank, a water outlet pipe of the membrane module, a pressure gauge with electric contact, a suction pump, a water inlet pipe of the suction pump, a backwashing pump, and a backwashing pipe. The membrane module, the water outlet pipe of the membrane module, the pressure gauge with electric contact, the water inlet pipe of the suction pump, and the suction pump are connected in sequence to form a membrane module water production system. The water outlet pipe of the membrane module, the pressure gauge with electric contact, the backwashing pipe, and the backwashing pump are connected in sequence to form a backwashing system. A method for treating chemically-precipitated heavy metal wastewater using the separation system is also provided. The separation effect is very good.

## Description

### DESCRIPTION

The invention relates to a treatment system of heavy metal wastewater and a treatment method of using the same, and more particularly to a solid-liquid separation system of chemically-precipitated heavy metal wastewater as well as a separation method of using the same.

Heavy metal pollution has constituted a serious threat to human health. How to effectively deal with heavy metal wastewater pollution has become a common concern of mankind. Conventional methods include physical, chemical, and biological methods. Physical methods, such as ion exchange, subject to the variety, yield, and cost of exchangers, cannot be applied in large. Thus, chemical methods and membrane separation technology are used widely.

1. Chemical methods

Chemical precipitation is a common method to deal with heavy metal wastewater. An alkali is added to heavy metal wastewater to modify the pH value, and a hydroxide precipitate is formed. Further, a coagulant or flocculant is added so that fine particles of the hydroxide precipitate coagulate into large particles of solid suspended matters and precipitate. However, the method occupies a large area and has a low efficiency. For example, a sloping plate sedimentation tank only has a design load of between 0.3 and 0.6 m³/m^{2.}h. Although the addition of the coagulant or flocculant makes the concentration of heavy metal sludge reach 10,000 mg/L, the purity of the heavy metal sludge decreases, so the recycling value is very low.

2. Membrane separation technology

Targeting at the difficult of slurry separation in chemical precipitation, TMF continuous microfiltration technology is developed. Based on the principle of tubular microfiltration cross-flow filter, a sludge mixture circulates with a speed of 3-5 m/s in a tubular microfiltration system. Water is drained out via the membrane holes. Solids with particle size larger than the membrane holes are intercepted. The pore size of continuous microfiltration membrane is generally smaller than 0.1 µm. Thus, impurities with particle size exceeding 0.1 µm are removed. However, the method requires a large-scale circulation of the sludge mixture, thus, the energy consumption is huge. For example, the energy consumption per ton of water is 1.0-2.0 Kw·h/m³. The equipment involved is installed externally and a separate continuous microfiltration room required. So, the process is very complicated and hardly suitable for mass popularization.

Thus, conventional methods for treating heavy metal wastewater have disadvantages. It is urgent to develop an economic and highly efficient method for solid-liquid separation.

In view of the above-described problems, it is one objective of the invention to provide a solid-liquid separation system of chemically-precipitated heavy metal wastewater that features good separation effect and continuous operation and a method for treating chemically-precipitated heavy metal wastewater with the solid-liquid separation system.

The solid-liquid separation system of chemically-precipitated heavy metal wastewater comprises a membrane module disposed in a filter zone of a chemical reaction tank, a water outlet pipe of the membrane module, a pressure gauge with electric contact, a suction pump, a water inlet pipe of the suction pump, a backwashing pump, and a backwashing pipe; wherein the membrane module, the water outlet pipe of the membrane module, the pressure gauge with electric contact, the water inlet pipe of the suction pump, and the suction pump are connected in sequence to form a membrane module water production system; and the water outlet pipe of the membrane module, the pressure gauge with electric contact, the backwashing pipe, and the backwashing pump are connected in sequence to form a backwashing system.

The membrane module disposed in the filter zone of the chemical reaction tank comprises a membrane box and a membrane material.

Te membrane material is a plate-type or hollow fiber microfiltration or ultrafiltration membrane, with a membrane pore size of between 0.01 and 10 µm.

The membrane pore size is an important technical parameter affecting the separation effect of the separation system. The separation effect has no relation with the material of the membrane, which is an inorganic or organic membrane.

The method for treating chemically-precipitated heavy metal wastewater with the solid-liquid separation system, comprising the steps of:

a) introducing a chemically-precipitated heavy metal sludge mixture into the filter zone, initiating the suction pump so that heavy metal suspended particulates are intercepted by the membrane material, and clear water flows inside the membrane material and finally received by a clear water zone via the water outlet pipe of the membrane module, the pressure gauge with electric contact, the water inlet pipe of the suction pump, and the suction pump, respectively;

b) 8-15 min later shutting down the suction pump and initiating the backwashing pump so that the clear water is pumped into the membrane material via the backwashing pipe, the pressure gauge with electric contact, and the water outlet pipe of the membrane module and rinses the membrane material for 1-3 min; and

c) collecting sludge and recycling heavy metals after the sludge concentration is accumulated to between 10 and 20 g/L.

After the heavy metal sludge mixture is pumped into the filter zone, as a single chemical precipitant a hydroxide or sulfide is added to improve the purity of the heavy metal suspended particulates.

The suction lift of the suction pump is 1-5 m, the normal suction pressure thereof is 0.01-0.05 Mpa and measured by the pressure gauge with electric contact connected to the water inlet pipe of the suction pump.

The delivery lift of the backwashing pump is 1-5 m. The clear water is pumped by the backwashing pump and flows into and rinses the microfiltration or ultrafiltration membrane via the backwashing pipe.

The relationship between the backwashing time and the suction time is: suction for 8-15 min, and then backwashing for 1-3 min.

When the concentration of heavy metal suspended particulates exceeds 10 g/L, the sludge mixture is pumped into a solid-liquid separation device (exceeding 100 mesh) for recycling heavy metal.

In the invention, the plate-type or hollow fiber microfiltration or ultrafiltration membrane with a membrane pore size of between 0.01 and 10 µm is disposed in the filter zone. Insoluble metal salts are produced by the reaction between the heavy metal ions in wastewater and a hydroxide or other anions. The particle size of the insoluble metal salts exceeds 10 µm. Under the suction pressure of the suction pump with suction lift of 1-5 m and the interception of the membrane material, the insoluble metal salts stay in the reaction tank, while the high quality clear water is drained out by the membrane module water production system. The insoluble metal salts accumulate constantly, the concentration thereof can reach 10-20 g/L, and the energy consumption per ton of water is merely 0.1-0.2 Kw·h/m³. The high concentration of insoluble metal salts can be recycled.

Advantages of the invention are summarized below:

1.The adoption of the plate-type or hollow fiber microfiltration or ultrafiltration membrane solves the disadvantage of high requirement on gravity sedimentation of suspended matters by conventional separation methods, thereby improving the solid-liquid separation effect and concentration ratio;

2. The method is easily achieved by high degree of integration and automation;

3. In contrast to continuous microfiltration technology, the energy consumption is decreased by 90%; and

4. No coagulant or flocculant involved, thereby reducing the reagent consumption.

Take chemically-precipitated heavy metal wastewater with SS concentration of 250 mg/L as an example, different methods are used to separate the solid and liquid therein. The results are listed as follows:

| Items | Gravity sedimentation | Continuous microfiltration | The invention |
|---|---|---|---|
| Energy consumption (kw·h/m³) | / | 1.0-2.0 | 0.1-0.2 |
| Reagent consumption (RMB/m³) | 0.70 | 0.65 | 0.00 |
| Occupied area (m²/m³) | 2.0-3.0 | 0.3-0.4 | 0.1-0.2 |
| Sludge concentration after condensation (g/L) | 3-5 | 10-20 | 10-20 |
| Profit | Low concentration of heavy metals in sludge, unrecyclable | High concentration of heavy metals in sludge, recyclable | High concentration of heavy metals in sludge, single component, recyclable |

FIG. 1 is a flow chart of a method for treating chemically-precipitated heavy metal wastewater with a solid-liquid separation system according to one embodiment of the invention;

FIG. 2 is a schematic diagram of a solid-liquid separation system of chemically-precipitated heavy metal wastewater according to one embodiment of the invention;

FIG. 3 is a schematic diagram of a solid-liquid separation system of chemically-precipitated heavy metal wastewater with a plate-type microfiltration or ultrafiltration membrane according to one embodiment of the invention;

FIG. 4 is a schematic diagram of a solid-liquid separation system of chemically-precipitated heavy metal wastewater with a round plate microfiltration or ultrafiltration membrane according to one embodiment of the invention; and

FIG. 5 is a schematic diagram of a solid-liquid separation system of chemically-precipitated heavy metal wastewater with a hollow fiber microfiltration or ultrafiltration membrane according to one embodiment of the invention.

In the drawings, the following reference numbers are used: 1. Water outlet pipe of membrane module; 2. Water inlet pipe of suction pump; 3. Pressure gauge with electric contact; 4. Suction pump; 5. Backwashing pipe; 6. Filter zone; 7. Membrane box; 8. Membrane material; 9. Clear water zone; 10. Backwashing pump; 11. Square plate microfiltration membrane; 12. Round plate microfiltration membrane; 13. Hollow fiber microfiltration membrane.

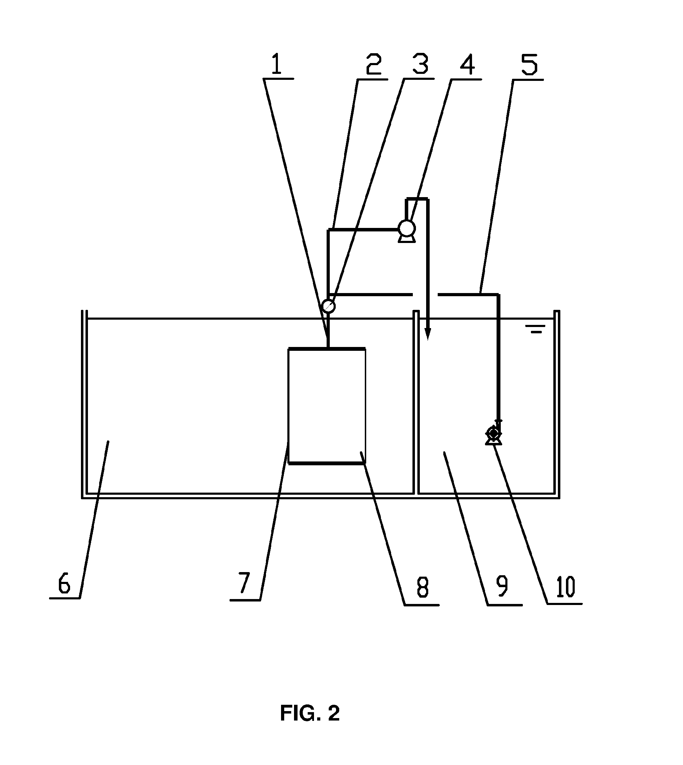

In the following examples, chemically-precipitated heavy metal wastewater is treated with a solid-liquid separation system, as shown in FIG. 2, comprising a membrane module disposed in a filter zone 6 of a chemical reaction tank, a water outlet pipe 1 of the membrane module, a pressure gauge with electric contact 3, a suction pump 4, a water inlet pipe 2 of the suction pump, a backwashing pump 10, and a backwashing pipe 5. The membrane module, the water outlet pipe 1 of the membrane module, the pressure gauge with electric contact 3, the water inlet pipe 2 of the suction pump, and the suction pump 4 are connected in sequence to form a membrane module water production system. The water outlet pipe 1 of the membrane module, the pressure gauge with electric contact 3, the backwashing pipe 5, and the backwashing pump 10 are connected in sequence to form a backwashing system. The backwashing system pumps water from a clear water zone 9 to rinse the membrane module water production system. The membrane module comprises a membrane box 7 and a membrane material 8.

### Example 1

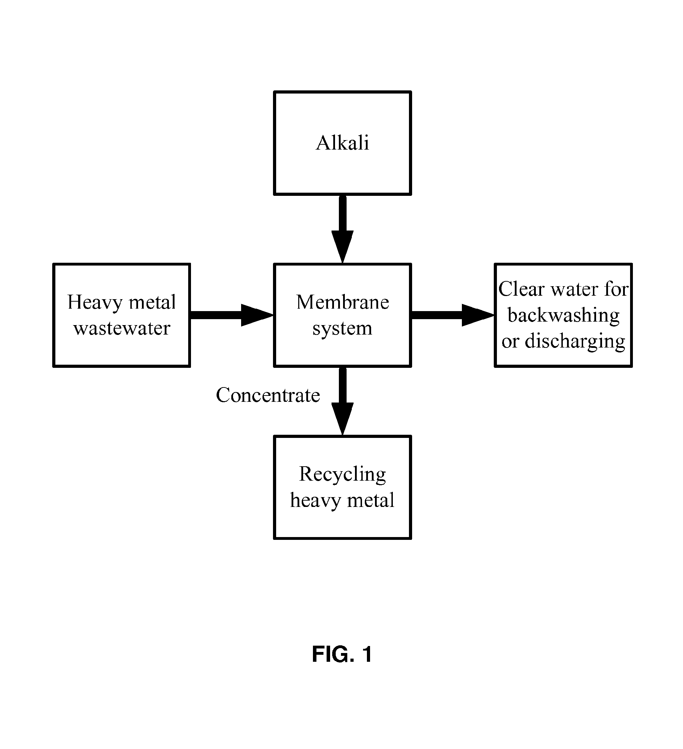

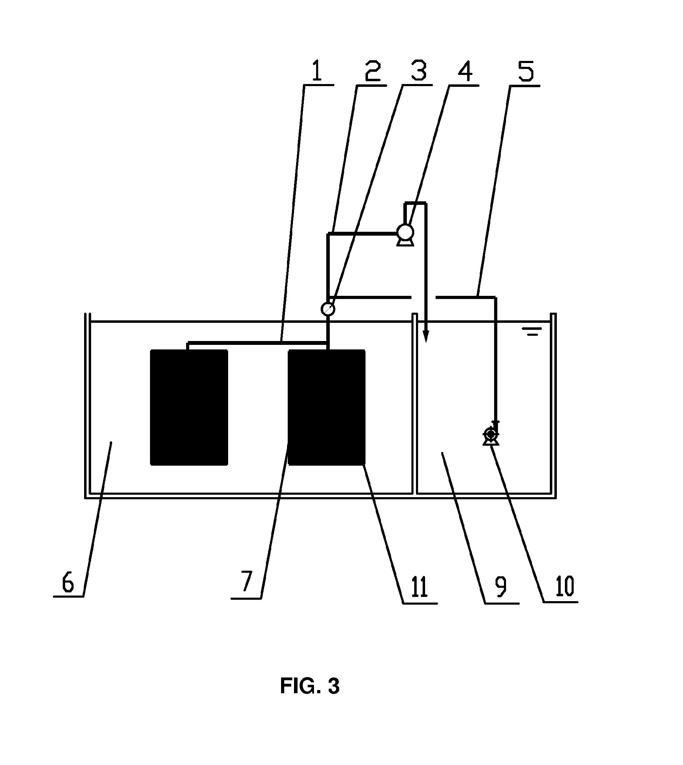

As shown in FIGS. 1, 2, and 3, a wastewater from an acid copper plating process of a plating manufacturer comprising 100 mg/L copper ions is filtered using a square plate microfiltration membrane 11 with an area of 6 m² and a pore size of 10 µm. The microfiltration membrane is made from polyvinylidene fluoride (PVDF). To control the pH value of the wastewater to exceed 9 so that the copper ions react with hydroxyl groups to yield a precipitate of copper hydroxide. The solid particulates of copper hydroxide are intercepted by the membrane and accumulate; thus, the concentration thereof is increasingly high. The operation parameters of the solid-liquid separation system are as follows: suction for 8 min, backwashing for 1 min; the suction lift of the suction pump is 1 m, and the delivery lift of the backwashing pump is 1 m. When the sludge concentration of the system reaches 20 g/L, the sludge is pumped into a plate and frame filter press (100 mesh) for separation. The resultant mud cake is high purity of copper hydroxide precipitate, from which copper is recycled directly.

### Example 2

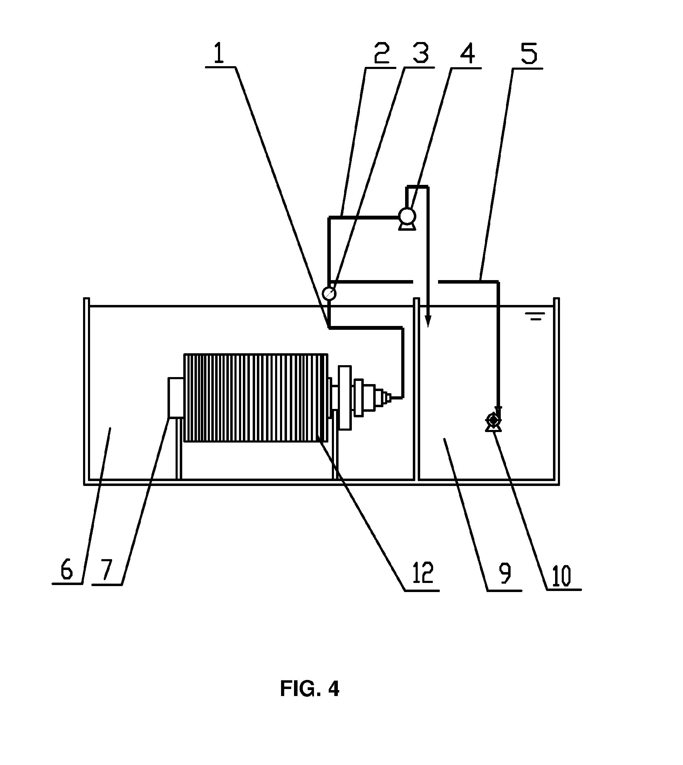

As shown in FIGS. 1, 2, and 4, a wastewater from a circuit board manufacturer comprising 20-40 mg/L nickel ions is filtered using a round plate microfiltration membrane 12 with a diameter of 110 mm and a pore size of 2 µm. The microfiltration membrane is made from polyvinyl chloride (PVC). To control the pH value of the wastewater to 5-6 with an alkali so that the nickel ions react with hydroxyl groups to yield a precipitate of nickel hydroxide. The solid particulates of nickel hydroxide are intercepted by the membrane and accumulate; thus, the concentration thereof is increasingly high. The operation parameters of the solid-liquid separation system are as follows: suction for 12 min, backwashing for 2 min; the suction lift of the suction pump is 3 m, and the delivery lift of the backwashing pump is 4 m. When the sludge concentration of the system reaches 20 g/L, the sludge is pumped into a plate and frame filter press (110 mesh) for separation. The resultant mud cake is high purity of nickel hydroxide precipitate, from which nickel is recycled directly.

### Example 3

As shown in FIGS. 1, 2, and 4, a wastewater from a plating manufacturer comprising 10-20 mg/L chromium ions (all hexavalent chromium ions are reduced to be trivalent chromium) is filtered using a round plate microfiltration membrane 12 with a diameter of 185 mm and a pore size of 0.4 µm. The microfiltration membrane is made from polyether sulfone (PES). To control the pH value of the wastewater to 10-11 with an alkali so that the chromium ions react with hydroxyl groups to yield a precipitate of chromium hydroxide. The solid particulates of chromium hydroxide are intercepted by the membrane and accumulate; thus, the concentration thereof is increasingly high. The operation parameters of the solid-liquid separation system are as follows: suction for 10 min, backwashing for 3 min; the suction lift of the suction pump is 5 m, and the delivery lift of the backwashing pump is 5 m. When the sludge concentration of the system reaches 20 g/L, the sludge is discharged.

### Example 4

As shown in FIGS. 1, 2, and 3, a wastewater from a plating manufacturer comprising 10-20 mg/L copper ions is filtered using a square plate microfiltration membrane 11 with a pore size of 0.01 µm. The microfiltration membrane is made from polyvinylidene fluoride (PVDF). To control the pH value of the wastewater to 10-11 with an alkali so that the copper ions react with hydroxyl groups to yield a precipitate of copper hydroxide. The solid particulates of copper hydroxide are intercepted by the membrane and accumulate; thus, the concentration thereof is increasingly high. The operation parameters of the solid-liquid separation system are as follows: suction for 15 min, backwashing for 1 min; the suction lift of the suction pump is 3 m, and the delivery lift of the backwashing pump is 3 m. When the sludge concentration of the system reaches 20 g/L, the sludge is pumped into a plate and frame filter press (100 mesh) for separation. The resultant mud cake is high purity of copper hydroxide precipitate, from which copper is recycled directly.

### Example 5

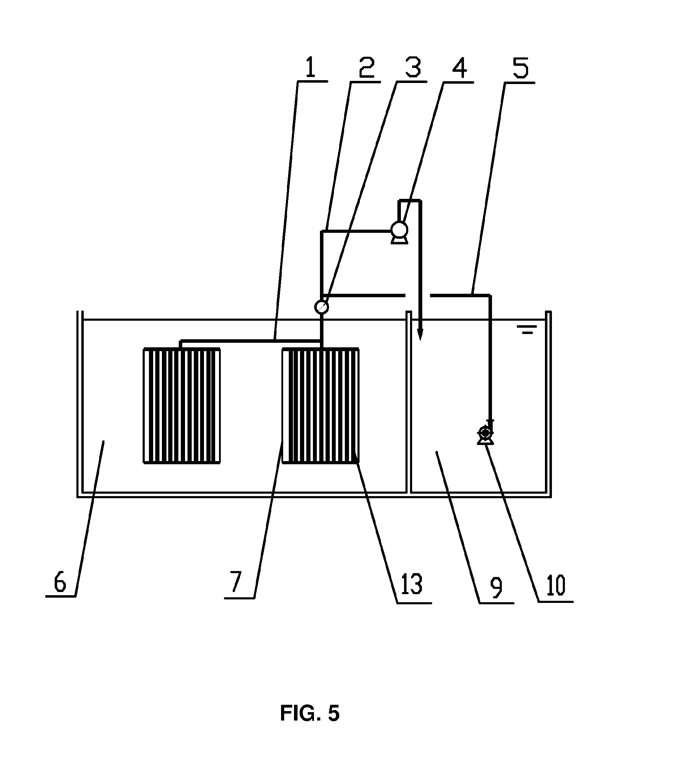

As shown in FIGS. 1, 2, and 5, a wastewater from a plating manufacturer comprising 40-60 mg/L copper ions is filtered using a hollow fiber microfiltration membrane 13 with a pore size of 0.01 µm. The microfiltration membrane is made from polyvinylidene fluoride (PVDF). To control the pH value of the wastewater to 10-11 with sodium sulfide so that the copper ions react with sulfide ions to yield a precipitate of copper sulfide. The solid particulates of copper sulfide are intercepted by the membrane and accumulate; thus, the concentration thereof is increasingly high. The operation parameters of the solid-liquid separation system are as follows: suction for 15 min, backwashing for 1 min; the suction lift of the suction pump is 3 m, and the delivery lift of the backwashing pump is 5 m. When the sludge concentration of the system reaches 20 g/L, the sludge is pumped into a plate and frame filter press (100 mesh) for separation. The resultant mud cake is high purity of copper sulfide precipitate, from which copper is recycled directly.

## Claims

1. A solid-liquid separation system of chemically-precipitated heavy metal wastewater comprising
a) a membrane module disposed in a filter zone of a chemical reaction tank;
b) a water outlet pipe of said membrane module;
c) a pressure gauge with electric contact;
d) a suction pump;
e) a water inlet pipe of said suction pump;
f) a backwashing pump; and
g) a backwashing pipe;
**characterized in that**
said membrane module, said water outlet pipe of said membrane module, said pressure gauge with electric contact, said water inlet pipe of said suction pump, and said suction pump are connected in sequence to form a membrane module water production system; and
said water outlet pipe of said membrane module, said pressure gauge with electric contact, said backwashing pipe, and said backwashing pump are connected in sequence to form a backwashing system.

2. The solid-liquid separation system of claim 1, **characterized in that** said membrane module comprises a membrane box and a membrane material.

3. The solid-liquid separation system of claim 2, **characterized in that** said membrane material is a plate-type or hollow fiber microfiltration or ultrafiltration membrane, with a membrane pore size of between 0.01 and 10 µm.

4. The solid-liquid separation system of claim 1, **characterized in that** the suction lift of said suction pump is 1-5 m, and the normal suction pressure thereof is 0.01-0.05 Mpa.

5. The solid-liquid separation system of claim 1, **characterized in that** the delivery lift of said backwashing pump is 1-5 m.

6. A method for treating chemically-precipitated heavy metal wastewater with a solid-liquid separation system of claim 1, comprising the steps of:
a) introducing a chemically-precipitated heavy metal sludge mixture into said filter zone, initiating said suction pump so that heavy metal suspended particulates are intercepted by said membrane material, and clear water flows inside said membrane material and finally received by a clear water zone via said water outlet pipe of said membrane module, said pressure gauge with electric contact, said water inlet pipe of said suction pump, and said suction pump, respectively; and
b) 8-15 min later shutting down said suction pump and initiating said backwashing pump so that said clear water is pumped into said membrane material via said backwashing pipe, said pressure gauge with electric contact, and said water outlet pipe of said membrane module and rinses said membrane material for 1-3 min.

7. The method of claim 6, further comprising collecting said sludge and recycling heavy metals after said sludge concentration is accumulated to between 10 and 20 g/L.

8. The method of claim 6, **characterized in that** the suction lift of said suction pump is 1-5 m, and the normal suction pressure thereof is 0.01-0.05 Mpa.

9. The method of claim 6, **characterized in that** the delivery lift of said backwashing pump is 1-5 m.

10. The method of claim 6, **characterized in that** the relationship between said backwashing time and said suction time is: suction for 8-15 min, and then backwashing for 1-3 min.

11. The method of claim 6, further comprises adding as a single chemical precipitant a hydroxide or sulfide after introducing said chemically-precipitated heavy metal sludge mixture into said filter zone.
